# EUROPEAN PATENT APPLICATION

(11) **EP 4 351 066 A1**
(43) Date of publication of application: **10.04.2024**
(21) Application number: 23199381.7
(22) Date of filing: 25.09.2023
(51) Int. Cl.: H04L 5/00

(54) **EFFICIENT AND FLEXIBLE FD-A-PPDU WITH SAME AND MIXED WIFI GENERATIONS TRANSMISSION**

(30) Priority: 07.10.2022 US 202263378701 P; 26.07.2023 US 202318226724
(71) Applicant: MediaTek Inc., 30078 Hsinchu City (TW)
(72) Inventor: CHEN, You-Wei, San Jose (US); LIU, Jianhan, San Jose (US); LU, Kai Ying, San Jose (US); PARE, Jr. Thomas Edward, San Jose (US)
(74) Representative: Patentship Patentanwaltsgesellschaft mbH

(57) **Abstract**

Techniques pertaining to efficient and flexible frequency domain (FD) aggregated physical-layer protocol data unit (FD-A-PPDU) with the same and/or mixed WiFi generations transmission are described. An apparatus (e.g., a station (STA)) performs (810) a wireless communication by: (i) transmitting (812) a FD-A-PPDU or (ii) receiving (814) the FD-A-PPDU. The wireless communication is performed in a 160MHz, 240MHz, 320MHz, 480MHz or 640MHz bandwidth with 80MHz being a minimum size of each of multiple PPDUs of the FD-A-PPDU. The FD-A-PPDU may be a 160MHz, 240MHz, 320MHz, 480MHz or640MHz FD-A-PPDU. The FD-A-PPDU may include PPDUs having a same PPDU format or different PPDU formats of different WiFi generations and utilizing a minimum size of 80MHz non-overlapping frequency subblocks as a base building block.

## Description

### TECHNICAL FIELD

The present disclosure is generally related to wireless communications and, more particularly, to efficient and flexible frequency domain (FD) aggregated physical-layer protocol data unit (FD-A-PPDU) with the same and/or mixed WiFi generations transmission.

### BACKGROUND

Unless otherwise indicated herein, approaches described in this section are not prior art to the claims listed below and are not admitted as prior art by inclusion in this section.

With the continuously growing WiFi ecosystems and applications, such as high-definition (HD) streaming, gaming, augmented reality (AR) and virtual reality (VR), available wireless spectrum is becoming ever more crowded to accommodate the sharply increasing number of WiFi devices. Accordingly, there persists a need to seek a better spectral efficiency in a new WiFi generation to better utilize limited wireless resource. There are some considerations in defining a new WiFi generation in accordance with upcoming Institute of Electrical and Electronics Engineers (IEEE) 802.11 standard(s). For example, as wide bandwidth PPDUs (e.g., 160 and 320MHz PPDUs) have been standardized in WiFi7, wider bandwidth PPDUs (e.g., 240, 480, and 640MHz PPDUs) are highly expected in the upcoming WiFi standard. Another consideration is that unbalanced bandwidth requirement tends to cause different capabilities of access point (AP) and non-AP transmission and reception. For example, a 320MHz-capable AP may serve several 20/80/160MHz-capable non-AP stations (STAs) through time-domain duplexing. This could result in the current Wi-Fi standard not being able to efficiently utilize the full PPDU bandwidth, especially in the secondary 160MHz of a 320MHz PPDU. Moreover, to improve the spectral efficiency, orthogonal frequency-division multiple-access (OFDMA) was implemented in WiFi6 (IEEE 802.11ax) and WiFi7 (IEEE 802.11be). The preamble structure of 11ax and 11 be are similar and can be aligned in time domain. Meanwhile, due to the prosperous IEEE 802.11 economic system, it is highly likely that 11ax devices coexist with 11be devices as well as Beyond-11be (defined as WiFi generations after 11be) devices in various wireless local area network (WLAN) deployments. In such cases, it would be desirable to conduct a mixed transmission by combining 11ax, 11be and/or Beyond-11be for a better scheduling flexibility. Therefore, there is a need for a solution of efficient and flexible FD-A-PPDU with the same and/or mixed WiFi generations transmission.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to efficient and flexible FD-A-PPDU with the same and/or mixed WiFi generations transmission. It is believed that aforementioned issue(s) may be avoided or otherwise alleviated by implementation of one or more of the various proposed schemes described herein. For instance, implementations of one or more of the proposed schemes may improve scheduling flexibility and spectral efficiency for transmissions by WiFi devices of the same and/or mixed WiFi generations using 160MHz, 240MHz, 480MHz and/or 640MHz bandwidth(s) in accordance with one or more upcoming IEEE 802.11 standards.

In a first aspect, a method may involve a processor of an apparatus performing a wireless communication by: (i) transmitting a FD-A-PPDU; or (ii) receiving the FD-A-PPDU. The FD-A-PPDU may be a 160MHz, 240MHz, 320MHz, 480MHz or 640MHz FD-A-PPDU. The FD-A-PPDU may include PPDUs having a same PPDU format or different PPDU formats of different WiFi generations and utilizing a minimum size of 80MHz non-overlapping frequency subblocks as a base building block.

In an embodiment of the first aspect, the FD-A-PPDU comprises multiple PPDUs of different WiFi generations combined with a same tone spacing and a same guard interval (GI). In an embodiment of the first aspect, the performing of the wireless communication comprises performing a downlink (DL) or trigger-based (TB) uplink (UL) communication. In an embodiment of the first aspect, the FD-A-PPDU comprises multiple PPDUs, and wherein, in an event that the apparatus is without a non-primary channel access capability, the apparatus is allocated at a primary channel. In an embodiment of the first aspect, the performing of the wireless communication comprises performing the wireless communication in the 240MHz bandwidth, and wherein the FD-A-PPDU comprises: in a first option, three 80MHz PPDUs; or in a second option, one 160MHz PPDU and one 80MHz PPDU. In an embodiment of the first aspect, the FD-A-PPDU has a bandwidth larger than or equal to 240MHz and comprises multiple PPDUs, and wherein, in an event that the apparatus uses a 160MHz maximal ratio combining (MRC) decoding processing, the apparatus is allocated at a primary 160MHz channel. In an embodiment of the first aspect, the FD-A-PPDU has a bandwidth larger than or equal to 240MHz and comprises multiple PPDUs, and wherein in an event that the apparatus is implemented in a smaller-bandwidth capable station (STA), the apparatus is allocated at a primary channel. In an embodiment of the first aspect, the performing of the wireless communication comprises performing the wireless communication in the 320MHz bandwidth, and wherein the FD-A-PPDU comprises: in a first option, four 80MHz PPDUs; in a second option, one 240MHz PPDU and one 80MHz PPDU; in a third option, two 160MHz PPDUs; or in a fourth option, one 160MHz PPDU and two 80MHz PPDUs. In an embodiment of the first aspect, the performing of the wireless communication comprises performing the wireless communication in the 480MHz bandwidth, and wherein the FD-A-PPDU comprises: in a first option, six 80MHz PPDUs; in a second option, one 320MHz PPDU and one 160MHz PPDU; in a third option, one 320MHz PPDU and two 80MHz PPDUs; in a fourth option, two 240MHz PPDUs; in a fifth option, one 240MHz PPDU, one 160MHz PPDU and one 80MHz PPDU; in a sixth option, one 240MHz PPDU and three 80MHz PPDUs; or in a seventh option, one 160MHz PPDU and four 80MHz PPDUs. In an embodiment of the first aspect, the performing of the wireless communication comprises performing the wireless communication in the 640MHz bandwidth, and wherein the FD-A-PPDU comprises: in a first option, eight 80MHz PPDUs; in a second option, one 480MHz PPDU and one 160MHz PPDU; in a third option, one 480MHz PPDU and two 80MHz PPDUs; in a fourth option, two 320MHz PPDUs; in a fifth option, one 320MHz PPDU, one 240MHz PPDU and one 80MHz PPDU; in a sixth option, one 320MHz PPDU and two 160MHz PPDUs; in a seventh option, one 320MHz PPDU, one 160MHz PPDU and two 80MHz PPDUs; in an eighth option, one 320MHz PPDU and four 80MHz PPDUs; in a ninth option, two 240MHz PPDUs and one 160MHz PPDU; in a tenth option, two 240MHz PPDUs and two 80MHz PPDUs; in an eleventh option, one 240MHz PPDU, one 160MHz PPDU and three 80MHz PPDUs; in a twelfth option, one 240MHz PPDU and five 80MHz PPDUs; in a thirteenth option, two 160MHz PPDUs and four 80MHz PPDUs; or in a fourteenth option, one 160MHz PPDU and six 80MHz PPDUs.

In a second aspect, a method may involve a processor of an apparatus (e.g., AP) assigning an associated STA to participate in a wireless communication with a FD-A-PPDU. The method may also involve the processor performing the wireless communication with the STA in a 160MHz, 240MHz, 320MHz, 480MHz or 640MHz bandwidth with 80MHz being a minimum size of each of multiple PPDUs of the FD-A-PPDU.

In an embodiment of the second aspect, the FD-A-PPDU comprises different PPDUs utilizing non-overlapping frequency subblocks. In an embodiment of the second aspect, the FD-A-PPDU comprises different PPDUs having a same PPDU format or different PPDU formats of different WiFi generations and aligned in a time domain. In an embodiment of the second aspect, the FD-A-PPDU comprises different PPDUs of different WiFi generations combined with a same tone spacing and a same guard interval (GI). In an embodiment of the second aspect, the performing of the wireless communication comprises performing a downlink (DL) or trigger-based (TB) uplink (UL) communication.

In a third aspect, a method may involve a processor of an apparatus (e.g., STA) receiving a signal from an AP to participate in a wireless communication with a FD-A-PPDU. The method may also involve the processor performing the wireless communication with the AP in a 160MHz, 240MHz, 320MHz, 480MHz or 640MHz bandwidth with 80MHz being a minimum size of each of multiple PPDUs of the FD-A-PPDU.

In an embodiment of the third aspect, the FD-A-PPDU comprises different PPDUs utilizing non-overlapping frequency subblocks. In an embodiment of the third aspect, the FD-A-PPDU comprises different PPDUs having a same PPDU format or different PPDU formats of different WiFi generations and aligned in a time domain. In an embodiment of the third aspect, the FD-A-PPDU comprises different PPDUs of different WiFi generations combined with a same tone spacing and a same guard interval (GI). In an embodiment of the third aspect, the performing of the wireless communication comprises performing a downlink (DL) or trigger-based (TB) uplink (UL) communication.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial loT (IIoT) and narrowband loT (NB-loT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example scenario under a proposed scheme in accordance with the present disclosure.
FIG. 3 is a diagram of an example scenario under a proposed scheme in accordance with the present disclosure.
FIG. 4 is a diagram of an example scenario under a proposed scheme in accordance with the present disclosure.
FIG. 5 is a diagram of an example scenario under a proposed scheme in accordance with the present disclosure.
FIG. 6 is a diagram of an example scenario under a proposed scheme in accordance with the present disclosure.
FIG. 7 is a block diagram of an example communication system in accordance with an implementation of the present disclosure.
FIG. 8 is a flowchart of an example process in accordance with an implementation of the present disclosure.
FIG. 9 is a flowchart of an example process in accordance with an implementation of the present disclosure.
FIG. 10 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to efficient and flexible FD-A-PPDU with the same and/or mixed WiFi generations transmission. According to the present disclosure, a number of possible solutions may be implemented separately or jointly. That is, although these possible solutions may be described below separately, two or more of these possible solutions may be implemented in one combination or another.

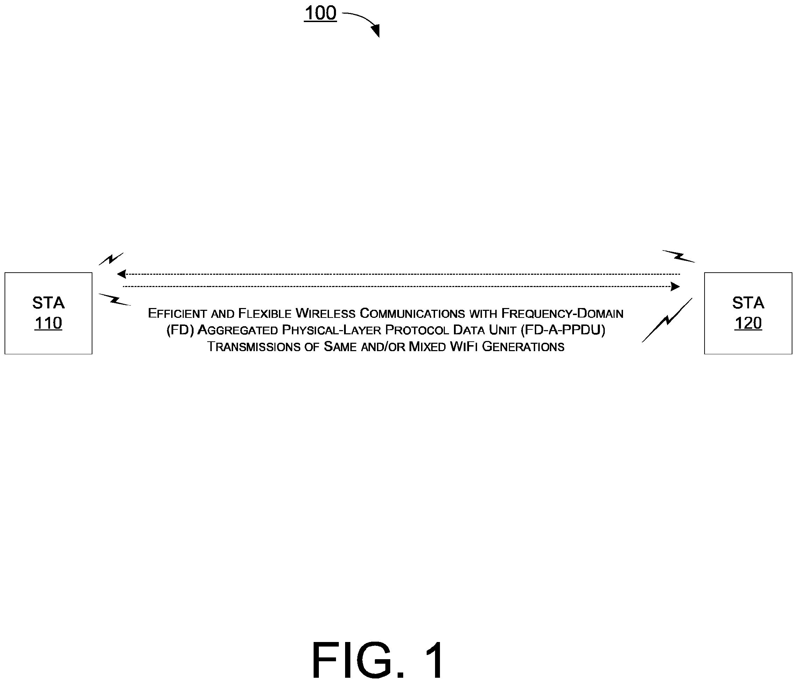

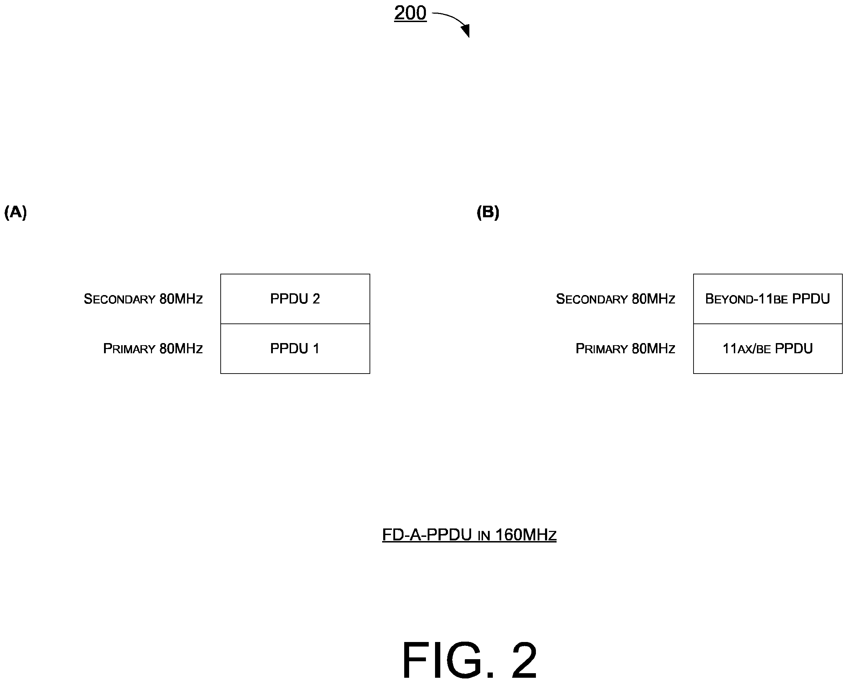

FIG. 1 illustrates an example network environment 100 in which various solutions and schemes in accordance with the present disclosure may be implemented. FIG. 2 ~ FIG. 10 illustrate examples of implementation of various proposed schemes in network environment 100 in accordance with the present disclosure. The following description of various proposed schemes is provided with reference to FIG. 1 ~ FIG. 10.

Referring to FIG. 1, network environment 100 may involve at least a STA 110 communicating wirelessly with a STA 120. Each of STA 110 and STA 120 may be an AP STA or, alternatively, either of STA 110 and STA 120 may function as a non-AP STA. STA 110 and STA 120 may be configured or otherwise capable to operate in accordance with the same or different IEEE 802.11 standard(s) (e.g., IEEE 802.11be and future-developed standards). Each of STA 110 and STA 120 may be configured to communicate with each other by utilizing the techniques pertaining to efficient and flexible FD-A-PPDU with the same and/or mixed WiFi generations transmission in accordance with various proposed schemes described below. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

In current IEEE 802.11 specification(s) with respect to extremely-high-throughput (EHT) physical layer (PHY), an EHT AP is to support certain features. One supported feature pertains to 40MHz and 80MHz channel widths and all resource unit (RU) and multi-RU (MRU) sizes and locations applicable to the 40MHz and 80MHz channel widths in the 5GHz band for transmission and reception. Another supported feature pertains to 40MHz, 80MHz and 160MHz channel widths and all RU and MRU sizes and locations applicable to the 40MHz, 80MHz and 160MHz channel widths in the 6GHz band for transmission and reception. Moreover, a non-AP EHT STA is to support 40MHz and 80MHz channel widths and all RU and MRU sizes and locations applicable to the 40MHz and 80MHz channel widths in the 5GHz and 6GHz bands for transmission and reception, except for 20MHz-only non-AP EHT STA. However, in current IEEE 802.11 standard, there is an unbalanced bandwidth requirement for EHT AP and non-AP EHT STA in that, in general, most non-AP STAs tend to have a smaller operating bandwidth than that of an AP. Accordingly, in the interest of improving spectral efficiency, it is imperative to support non-AP STAs in access to non-primary channels to utilize FD-A-PPDUs within the same WiFi generation.

As defined in current IEEE 802.11 standard, multi-user (MU) PPDUs for high-efficiency (HE) and EHT are very similar, and they can be well-aligned in time domain (including symbol boundaries). It is expected that Beyond-11be devices will support similar PPDU structure, which includes features such as preamble design and tone spacing that support backward compatibility. With flourishing deployment of WiFi applications and devices, there are increasingly more scenarios in which legacy (before IEEE 802.11ax) devices and IEEE 802.11ax/be/Beyond-11be devices coexist in WiFi ecosystems. Thus, it is desirable to develop a mixed-generation transmission scheme within a single PPDU bandwidth to accommodate wireless devices of multiple WiFi generations for an improved scheduling flexibility and for combining with a non-primary channel access capability to achieve improved spectral efficiency.

With respect to RU allocation in WiFi based on the IEEE 802.11 standard, an EHT AP does not allocate an RU or MRU in the secondary 160MHz channel of a 320MHz EHT MU PPDU or EHT trigger-based (TB) PPDU to an 80MHz operating non-AP EHT STA. Additionally, an EHT AP is not to allocate an RU or MRU in the secondary 80MHz channel of a 160MHz or 320MHz EHT MU or EHT TB PPDU to an 80MHz operating non-AP EHT STA, if the 80MHz operating non-AP EHT STA has not set up subchannel selective transmission (SST) operation on the secondary 80MHz channel with the EHT AP or if there is an inactive 20 MHz subchannel within the secondary 80MHz channel. Furthermore, an EHT AP with dot11EHTBaseLineFeatureslmplementedOnly equal to true is not to allocate an RU or MRU on the secondary 160MHz in a 320MHz EHT MU PPDU or EHT TB PPDU to a 160MHz operating non-AP EHT STA. Accordingly, a 320MHz PPDU can support STAs in the primary and secondary 160MHz channels depending on their operating bandwidth. Moreover, a 320MHz PPDU can support a single STA or a combination of narrow-bandwidth operating STAs at a time. Also, STAs are to use the primary channel for clear channel access (CCA) and frame exchange, and a STA can access the secondary 80MHz channel if it supports SST. In the current IEEE 802.11 standard, only 320MHz-operating STAs can access the secondary 160MHz channel, which tends to result in a rather limited efficiency for a 320MHz PPDU.

With respect to per-80MHz preamble based on the IEEE 802.11 standard, for a 160MHz or 320MHz EHT MU PPDU or enhanced range (ER) preamble, the universal signal field (U-SIG) content needs to be identical in all non-punctured 20MHz subchannels within each 80MHz frequency subblock, and the U-SIG field content in different 80MHz frequency subblocks may be different. Notably, 20MHz, 40MHz and 80MHz EHT PPDUs have one 20MHz, 40MHz, and 80MHz frequency subblock, respectively. Also, 160MHz and 320MHz EHT PPDUs have two and four 80MHz frequency subblocks, respectively. The U-SIG field content may vary between 80MHz frequency subblocks in a 160MHz or 320MHz EHT MU PPDU with the PPDU Type And Compression Mode field equal to 0 and the UL/DL field equal to 0 in the U-SIG field (for downlink (DL) OFDMA). For all other cases, U-SIG field content is the same for all frequency subblocks. The EHT-SIG field of an MU PPDU that is 160MHz or wider contains two EHT-SIG content channels per 80MHz. The EHT-SIG content channels per 80MHz are allowed to carry different information when EHT MU PPDU bandwidth for OFDMA transmission is wider than 80MHz. In the current 11be D2.0, the preamble (including at least U-SIG, EHT-SIG, and puncturing information) can carry different information per 80MHz channel. In the upcoming WiFi standard, more flexible and efficient preamble is expected. Therefore, 80MHz-operating PPDUs may be a reasonable granularity to utilize FD-A-PPDU to form the same and/or the mixed WiFi generations transmission with IEEE 802.11ax/be and Beyond-11be devices.

FIG. 2 illustrates an example scenario 200 of FD-A-PPDU in 160MHz under a proposed scheme in accordance with the present disclosure. Part (A) of FIG. 2 shows an example of 160MHz FD-A-PPDU. Part (B) of FIG. 2 shows an example of mixed WiFi generations transmission in a 160MHz FD-A-PPDU. Under the proposed scheme, different PPDUs may utilize non-overlapping frequency subblocks. Additionally, different PPDUs may have the same PPDU format or different PPDU formats in different WiFi generations (e.g., 11ax, 11be and Beyond-11be) as long as they can be aligned in the time domain, includes the symbol boundaries of the functional fields (e.g., U-SIG being aligned with HE-SIG-A). Moreover, different PPDUs with different WiFi generations may need to be combined with the same tone spacing and guard interval (GI). Under the proposed scheme, both DL and trigger-based uplink (UL) are applicable. Moreover, mixed WiFi generations transmission by aggregating 11ax, 11be and Beyond-11be non-AP STAs may provide an improved scheduling flexibility gain. In such use cases, devices of the latest WiFi generation may be allocated at the secondary channel. It is believed that, under the proposed scheme, using the same WiFi generation transmission in FD-A-PPDU may save preamble overhead due to the limited resource indication in 80MHz as compared to a whole-160MHz indication.

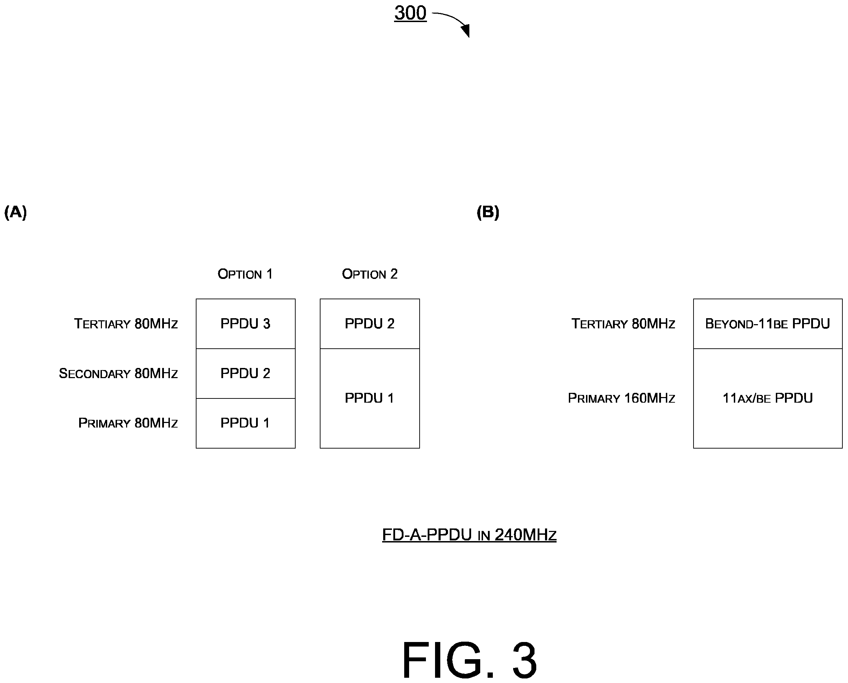

FIG. 3 illustrates an example scenario 300 of FD-A-PPDU in 240MHz under a proposed scheme in accordance with the present disclosure. Part (A) of FIG. 3 shows an example of 240MHz FD-A-PPDU format options. Part (B) of FIG. 3 shows an example of mixed WiFi generations transmission in a 240MHz FD-A-PPDU as combining a 160MHz operating 11ax/be PPDU with a Beyond-11be PPDU. Under the proposed scheme, different PPDUs may utilize non-overlapping frequency subblocks. Additionally, different PPDUs may have the same PPDU format or different PPDU formats in different WiFi generations (e.g., 11ax, 11be and Beyond-11be) as long as they can be aligned in the time domain, including the symbol boundaries of the functional fields (e.g., U-SIG being aligned with HE-SIG-A). Moreover, different PPDUs with different WiFi generations may need to be combined with the same tone spacing and Gl. Furthermore, both DL and trigger-based UL are applicable. Under the proposed scheme, an AP may know and assign its associated non-AP STAs to join the FD-A-PPDU depending on their capabilities. The example shown in part (A) of FIG. 3 is illustrated based on the operating bandwidth, which is not to be construed to limit the PPDU frequency allocation. Accordingly, devices of the latest WiFi generation (with enhanced non-primary channel access medium access control (MAC) protocol) may be allocated at the non-primary channel.

As an example, there may be devices in 11ax/be supporting 160MHz-only maximal ratio combining (MRC). In this example, referring to part (A) of FIG. 3, Option 2 may be a solution to address this coexistence issue. A 160MHz operating non-AP STA in 11ax/be may be assigned to the primary 160MHz to allow devices of the new WiFi generation to utilize the remaining 80MHz. Therefore, the 160MHz MRC decoding issue may be circumvented while allowing devices of different WiFi generations to participate in FD-A-PPDU, as shown in part (B) of FIG. 3. As another example, with Beyond-11be devices in Option 2, PPDU 2 with 80MHz operating bandwidth may be allocated in the primary channel, and PPDU 1 with 160MHz operating bandwidth may utilize the secondary and tertiary 80MHz in a 240MHz PPDU.

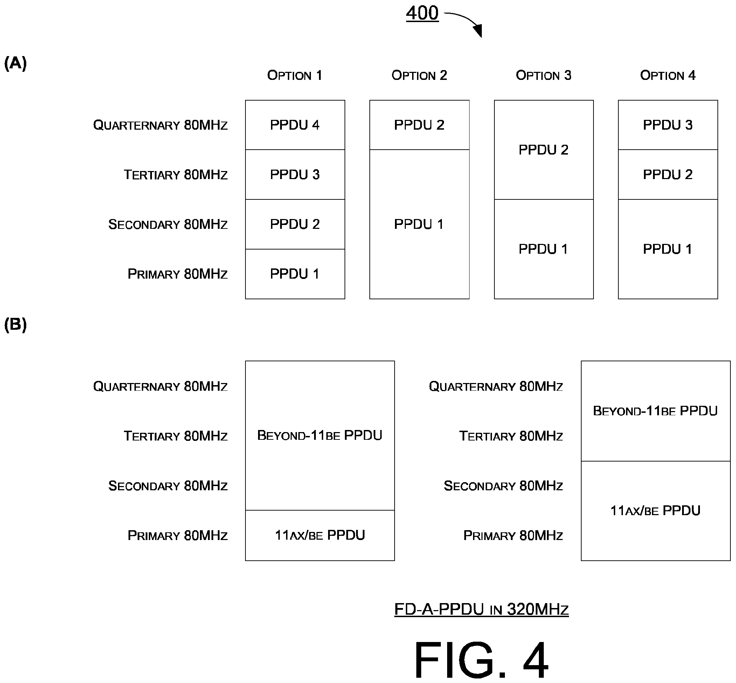

FIG. 4 illustrates an example scenario 400 of FD-A-PPDU in 320MHz under a proposed scheme in accordance with the present disclosure. Part (A) of FIG. 4 shows an example of 320MHz FD-A-PPDU format options. Part (B) of FIG. 4 shows an example of Option 2 using mixed WiFi generations transmission in a 320MHz FD-A-PPDU. Part (C) of FIG. 4 shows an example of Option 3 using mixed WiFi generations in a 320MHz FD-A-PPDU. Under the proposed scheme, different PPDUs may utilize non-overlapping frequency subblocks. Additionally, different PPDUs may have the same PPDU format or different PPDU formats in different WiFi generations (e.g., 11ax, 11be and Beyond-11be) as long as they can be aligned in the time domain, including the symbol boundaries of the functional fields (e.g., U-SIG being aligned with HE-SIG-A). Moreover, different PPDUs with different WiFi generations may need to be combined with the same tone spacing and Gl. Furthermore, both DL and trigger-based UL are applicable. Under the proposed scheme, an AP may know and assign its associated non-AP STAs to join the FD-A-PPDU depending on their capabilities. The example shown in part (A) of FIG. 4 is illustrated based on the operating bandwidth, which is not to be construed to limit the PPDU frequency allocation. Accordingly, devices of the latest WiFi generation may be allocated at the non-primary channel.

As an example, in Option 2 (as shown in part (A) of FIG. 4), PPDU 2 with 80MHz operating bandwidth may be allocated in the primary channel, and PPDU 1 with 240MHz operating bandwidth may utilize the remaining 80MHz channels in a 320MHz PPDU. As another example, there may be devices in 11ax/be supporting 160MHz-only MRC. Accordingly, Option 3 (as shown in part (A) of FIG. 4) may be a solution to address this coexistence issue. A 160MHz operating non-AP STA in 11ax/be may be assigned to the primary 160MHz to allow devices of the new WiFi generation to utilize the secondary 160MHz. Therefore, the 160MHz MRC decoding issue may be circumvented while allowing devices of different WiFi generations to participate in FD-A-PPDU, as shown in part (C) of FIG. 4.

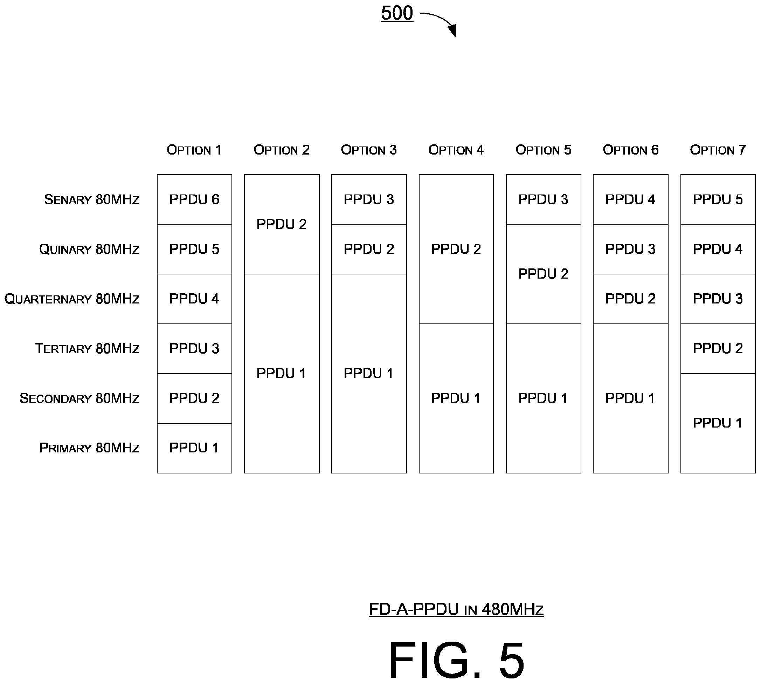

FIG. 5 illustrates an example scenario 500 of FD-A-PPDU in 480MHz under a proposed scheme in accordance with the present disclosure. FIG. 5 shows an example of 480MHz FD-A-PPDU format options. Under the proposed scheme, different PPDUs may utilize non-overlapping frequency subblocks. Additionally, different PPDUs may have the same PPDU format or different PPDU formats in different WiFi generations (e.g., 11ax, 11be and Beyond-11be) as long as they can be aligned in the time domain, including the symbol boundaries of the functional fields (e.g., U-SIG being aligned with HE-SIG-A). Moreover, different PPDUs with different WiFi generations may need to be combined with the same tone spacing and Gl. Furthermore, both DL and trigger-based UL are applicable. Under the proposed scheme, an AP may know and assign its associated non-AP STAs to join the FD-A-PPDU depending on their capabilities. The example shown in FIG. 5 is illustrated based on the operating bandwidth, which is not to be construed to limit the PPDU frequency allocation. Accordingly, devices of the latest WiFi generation may be allocated at the non-primary channel.

As an example, in Option 2 (as shown in FIG. 5), PPDU 2 with 160MHz operating bandwidth may be allowed in the primary 160MHz channel, and PPUD 1 with 320MHz operating bandwidth may utilize the remaining 80MHz channels in a 480MHz PPDU.

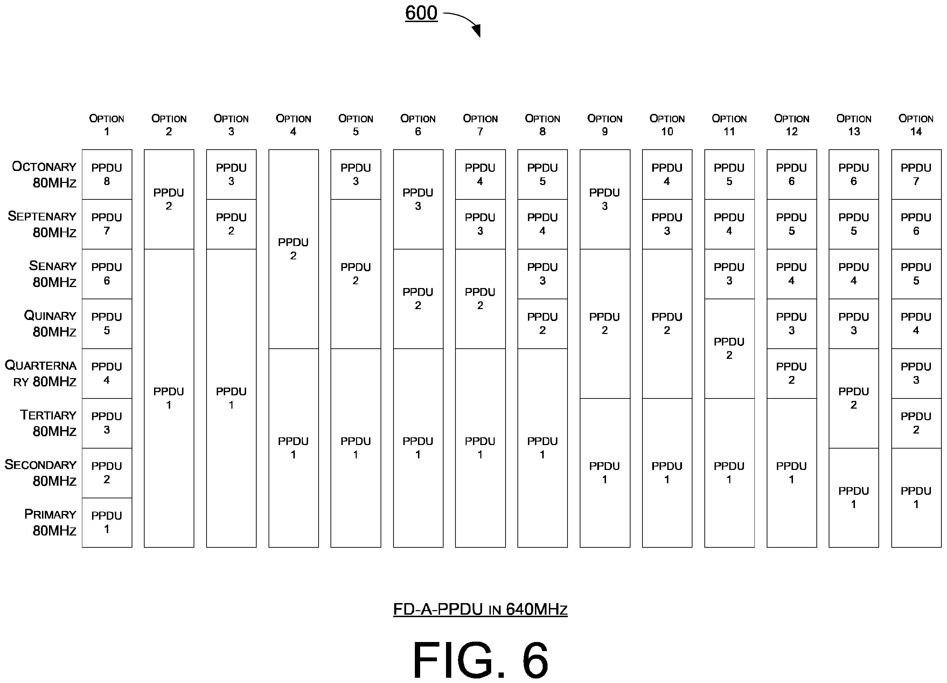

FIG. 6 illustrates an example scenario 600 of FD-A-PPDU in 640MHz under a proposed scheme in accordance with the present disclosure. FIG. 6 shows an example of 640MHz FD-A-PPDU format options. Under the proposed scheme, different PPDUs may utilize non-overlapping frequency subblocks. Additionally, different PPDUs may have the same PPDU format or different PPDU formats in different WiFi generations (e.g., 11ax, 11be and Beyond-11be) as long as they can be aligned in the time domain, including the symbol boundaries of the functional fields (e.g., U-SIG being aligned with HE-SIG-A). Moreover, different PPDUs with different WiFi generations may need to be combined with the same tone spacing and Gl. Furthermore, both DL and trigger-based UL are applicable. Under the proposed scheme, an AP may know and assign its associated non-AP STAs to join the FD-A-PPDU depending on their capabilities. The example shown in FIG. 6 is illustrated based on the operating bandwidth, which is not to be construed to limit the PPDU frequency allocation. Accordingly, devices of the latest WiFi generation may be allocated at the non-primary channel.

As an example, in Option 2 (as shown in FIG. 6), PPDU 2 with 160MHz operating bandwidth may be allowed in the primary 160MHz channel, and PPUD 1 with 480MHz operating bandwidth may utilize the remaining 80MHz channels in a 640MHz PPDU.

### Illustrative Implementations

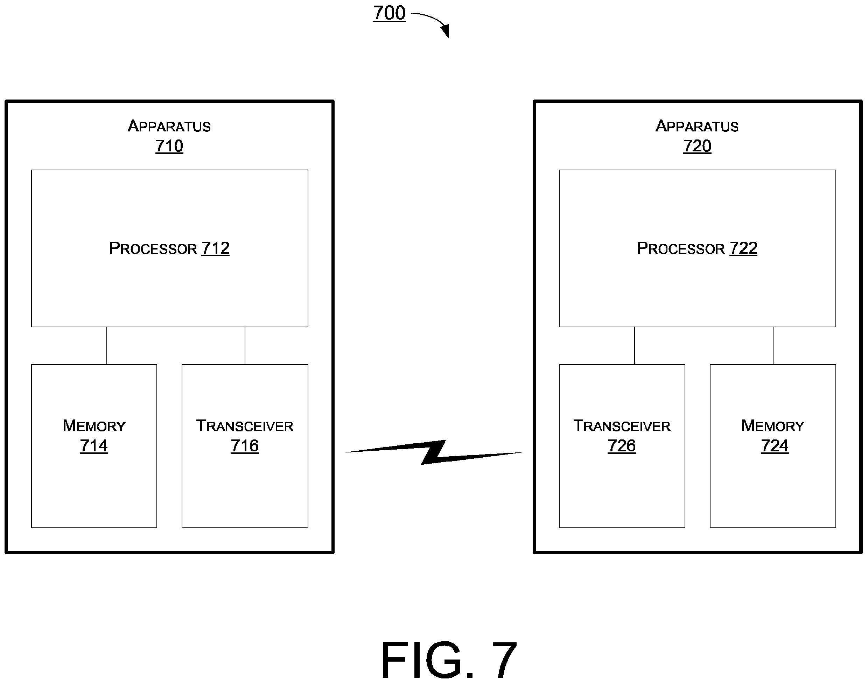

FIG. 7 illustrates an example system 700 having at least an example apparatus 710 and an example apparatus 720 in accordance with an implementation of the present disclosure. Each of apparatus 710 and apparatus 720 may perform various functions to implement schemes, techniques, processes and methods described herein pertaining to efficient and flexible FD-A-PPDU with the same and/or mixed WiFi generations transmission, including the various schemes described above with respect to various proposed designs, concepts, schemes, systems and methods described above as well as processes described below. For instance, apparatus 710 may be implemented in STA 110 and apparatus 720 may be implemented in STA 120, or vice versa.

Each of apparatus 710 and apparatus 720 may be a part of an electronic apparatus, which may be a non-AP STA or an AP STA, such as a portable or mobile apparatus, a wearable apparatus, a wireless communication apparatus or a computing apparatus. When implemented in a STA, each of apparatus 710 and apparatus 720 may be implemented in a smartphone, a smart watch, a personal digital assistant, a digital camera, or a computing equipment such as a tablet computer, a laptop computer or a notebook computer. Each of apparatus 710 and apparatus 720 may also be a part of a machine type apparatus, which may be an loT apparatus such as an immobile or a stationary apparatus, a home apparatus, a wire communication apparatus or a computing apparatus. For instance, each of apparatus 710 and apparatus 720 may be implemented in a smart thermostat, a smart fridge, a smart door lock, a wireless speaker or a home control center. When implemented in or as a network apparatus, apparatus 710 and/or apparatus 720 may be implemented in a network node, such as an AP in a WLAN.

In some implementations, each of apparatus 710 and apparatus 720 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 710 and apparatus 720 may be implemented in or as a STA or an AP. Each of apparatus 710 and apparatus 720 may include at least some of those components shown in FIG. 7 such as a processor 712 and a processor 722, respectively, for example. Each of apparatus 710 and apparatus 720 may further include one or more other components not pertinent to the proposed scheme of the present disclosure (e.g., internal power supply, display device and/or user interface device), and, thus, such component(s) of apparatus 710 and apparatus 720 are neither shown in FIG. 7 nor described below in the interest of simplicity and brevity.

In one aspect, each of processor 712 and processor 722 may be implemented in the form of one or more single-core processors, one or more multi-core processors, one or more RISC processors or one or more CISC processors. That is, even though a singular term "a processor" is used herein to refer to processor 712 and processor 722, each of processor 712 and processor 722 may include multiple processors in some implementations and a single processor in other implementations in accordance with the present disclosure. In another aspect, each of processor 712 and processor 722 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 712 and processor 722 is a special-purpose machine specifically designed, arranged and configured to perform specific tasks including those pertaining to efficient and flexible FD-A-PPDU with the same and/or mixed WiFi generations transmission in accordance with various implementations of the present disclosure.

In some implementations, apparatus 710 may also include a transceiver 716 coupled to processor 712. Transceiver 716 may include a transmitter capable of wirelessly transmitting and a receiver capable of wirelessly receiving data. In some implementations, apparatus 720 may also include a transceiver 726 coupled to processor 722. Transceiver 726 may include a transmitter capable of wirelessly transmitting and a receiver capable of wirelessly receiving data. It is noteworthy that, although transceiver 716 and transceiver 726 are illustrated as being external to and separate from processor 712 and processor 722, respectively, in some implementations, transceiver 716 may be an integral part of processor 712 as a system on chip (SoC), and transceiver 726 may be an integral part of processor 722 as a SoC.

In some implementations, apparatus 710 may further include a memory 714 coupled to processor 712 and capable of being accessed by processor 712 and storing data therein. In some implementations, apparatus 720 may further include a memory 724 coupled to processor 722 and capable of being accessed by processor 722 and storing data therein. Each of memory 714 and memory 724 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 714 and memory 724 may include a type of read-only memory (ROM) such as mask ROM, programmable ROM (PROM), erasable programmable ROM (EPROM) and/or electrically erasable programmable ROM (EEPROM). Alternatively, or additionally, each of memory 714 and memory 724 may include a type of non-volatile random-access memory (NVRAM) such as flash memory, solid-state memory, ferroelectric RAM (FeRAM), magnetoresistive RAM (MRAM) and/or phase-change memory.

Each of apparatus 710 and apparatus 720 may be a communication entity capable of communicating with each other using various proposed schemes in accordance with the present disclosure. For illustrative purposes and without limitation, a description of capabilities of apparatus 710, as STA 110, and apparatus 720, as STA 120, is provided below. It is noteworthy that, although a detailed description of capabilities, functionalities and/or technical features of apparatus 720 is provided below, the same may be applied to apparatus 710 although a detailed description thereof is not provided solely in the interest of brevity. It is also noteworthy that, although the example implementations described below are provided in the context of WLAN, the same may be implemented in other types of networks.

Under various proposed schemes pertaining to efficient and flexible FD-A-PPDU with the same and/or mixed WiFi generations transmission in accordance with the present disclosure, with apparatus 710 implemented in or as STA 110 and apparatus 720 implemented in or as STA 120 in network environment 100, processor 712 of apparatus 710 may perform, via transceiver 716, a wireless communication (e.g., with apparatus 720) involving a FD-A-PPDU by: (i) transmitting the FD-A-PPDU; or (ii) receiving the FD-A-PPDU. In some implementations, the FD-A-PPDU may be a 160MHz, 240MHz, 320MHz, 480MHz or 640MHz FD-A-PPDU. The FD-A-PPDU may include PPDUs having a same PPDU format or different PPDU formats of different WiFi generations and utilizing a minimum size of 80MHz non-overlapping frequency subblocks as a base building block.

In some implementations, the FD-A-PPDU may include multiple PPDUs of different WiFi generations combined with a same tone spacing and a same Gl.

In some implementations, in performing the wireless communication, processor 712 may perform a DL or TB UL communication.

In some implementations, the FD-A-PPDU may include multiple PPDUs. Moreover, in an event that apparatus 710 is without a non-primary channel access capability, apparatus 710 may be allocated at a primary channel.

In some implementations, in performing the wireless communication, processor 712 may perform the wireless communication in the 240MHz bandwidth. In such cases, the FD-A-PPDU may include: (a) in a first option, three 80MHz PPDUs; or (b) in a second option, one 160MHz PPDU and one 80MHz PPDU.

In some implementations, the FD-A-PPDU may have a bandwidth larger than or equal to 240MHz and may include multiple PPDUs. Moreover, in an event that apparatus 710 uses a 160MHz MRC decoding processing, apparatus 710 may be allocated at a primary 160MHz channel.

In some implementations, the FD-A-PPDU may have a bandwidth larger than or equal to 240MHz and comprises multiple PPDUs. Moreover, in an event that apparatus 710 implemented in a smaller-bandwidth capable STA, apparatus 710 may be allocated at a primary channel.

In some implementations, in performing the wireless communication, processor 712 may perform the wireless communication in the 320MHz bandwidth. In such cases, the FD-A-PPDU may include: (a) in a first option, four 80MHz PPDUs; (b) in a second option, one 240MHz PPDU and one 80MHz PPDU; (c) in a third option, two 160MHz PPDUs; or (d) in a fourth option, one 160MHz PPDU and two 80MHz PPDUs.

In some implementations, in performing the wireless communication, processor 712 may perform the wireless communication in the 480MHz bandwidth. In such cases, the FD-A-PPDU may include: (a) in a first option, six 80MHz PPDUs; (b) in a second option, one 320MHz PPDU and one 160MHz PPDU; (c) in a third option, one 320MHz PPDU and two 80MHz PPDUs; (d) in a fourth option, two 240MHz PPDUs; (e) in a fifth option, one 240MHz PPDU, one 160MHz PPDU and one 80MHz PPDU; (f) in a sixth option, one 240MHz PPDU and three 80MHz PPDUs; or (g) in a seventh option, one 160MHz PPDU and four 80MHz PPDUs.

In some implementations, in performing the wireless communication, processor 712 may perform the wireless communication in the 640MHz bandwidth. In such cases, the FD-A-PPDU may include: (a) in a first option, eight 80MHz PPDUs; (b) in a second option, one 480MHz PPDU and one 160MHz PPDU; (c) in a third option, one 480MHz PPDU and two 80MHz PPDUs; (d) in a fourth option, two 320MHz PPDUs; (e) in a fifth option, one 320MHz PPDU, one 240MHz PPDU and one 80MHz PPDU; (f) in a sixth option, one 320MHz PPDU and two 160MHz PPDUs; (g) in a seventh option, one 320MHz PPDU, one 160MHz PPDU and two 80MHz PPDUs; (h) in an eighth option, one 320MHz PPDU and four 80MHz PPDUs; (i) in a ninth option, two 240MHz PPDUs and one 160MHz PPDU; (j) in a tenth option, two 240MHz PPDUs and two 80MHz PPDUs; (k) in an eleventh option, one 240MHz PPDU, one 160MHz PPDU and three 80MHz PPDUs; (l) in a twelfth option, one 240MHz PPDU and five 80MHz PPDUs; (m) in a thirteenth option, two 160MHz PPDUs and four 80MHz PPDUs; or (n) in a fourteenth option, one 160MHz PPDU and six 80MHz PPDUs.

Under various proposed schemes pertaining to efficient and flexible FD-A-PPDU with the same and/or mixed WiFi generations transmission in accordance with the present disclosure, with apparatus 710 implemented in or as STA 110 and apparatus 720 implemented in or as STA 120 in network environment 100, processor 722 of apparatus 720 may, as an AP STA, assign, via transceiver 726, an associated STA (e.g., apparatus 710) to participate in a wireless communication with a FD-A-PPDU. Moreover, processor 722 may perform, via transceiver 726, the wireless communication with the STA in a 160MHz, 240MHz, 320MHz, 480MHz or 640MHz bandwidth with 80MHz being a minimum size of each of multiple PPDUs of the FD-A-PPDU.

In some implementations, the FD-A-PPDU may include different PPDUs utilizing non-overlapping frequency subblocks.

In some implementations, the FD-A-PPDU may include different PPDUs having a same PPDU format or different PPDU formats of different WiFi generations and aligned in a time domain.

In some implementations, the FD-A-PPDU may include different PPDUs of different WiFi generations combined with a same tone spacing and a same Gl.

In some implementations, in performing the wireless communication, processor 722 may perform a DL or TB UL communication.

Under various proposed schemes pertaining to efficient and flexible FD-A-PPDU with the same and/or mixed WiFi generations transmission in accordance with the present disclosure, with apparatus 710 implemented in or as STA 110 and apparatus 720 implemented in or as STA 120 in network environment 100, processor 712 of apparatus 710 may, as a STA, receive, via transceiver 716, a signal from an AP (e.g., apparatus 720) to participate in a wireless communication with a FD-A-PPDU. Furthermore, processor 712 may perform, via transceiver 716, the wireless communication with the AP in a 160MHz, 240MHz, 320MHz, 480MHz or 640MHz bandwidth with 80MHz being a minimum size of each of multiple PPDUs of the FD-A-PPDU.

In some implementations, the FD-A-PPDU may include different PPDUs utilizing non-overlapping frequency subblocks.

In some implementations, the FD-A-PPDU may include different PPDUs having a same PPDU format or different PPDU formats of different WiFi generations and aligned in a time domain.

In some implementations, the FD-A-PPDU may include different PPDUs of different WiFi generations combined with a same tone spacing and a same Gl.

In some implementations, in performing the wireless communication, processor 712 may perform a DL or TB UL communication.

### Illustrative Processes

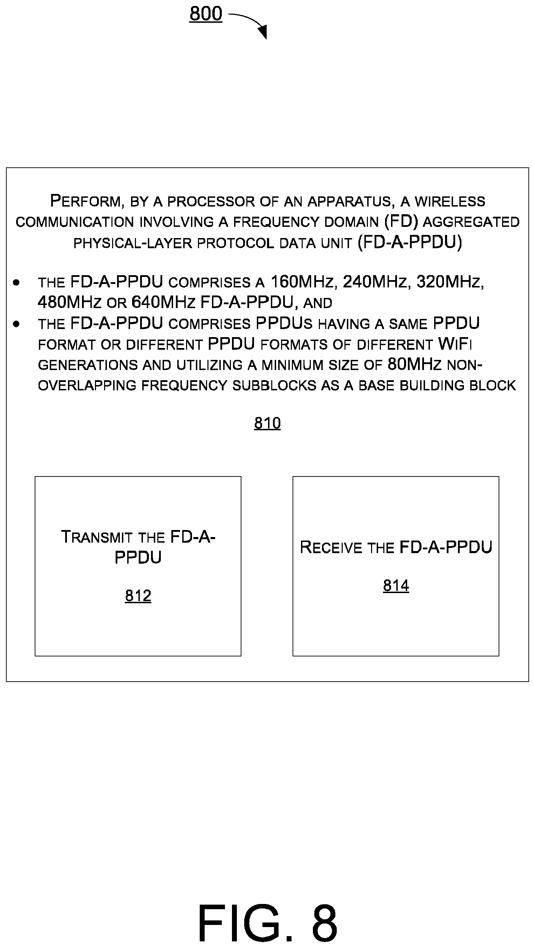

FIG. 8 illustrates an example process 800 in accordance with an implementation of the present disclosure. Process 800 may represent an aspect of implementing various proposed designs, concepts, schemes, systems and methods described above. More specifically, process 800 may represent an aspect of the proposed concepts and schemes pertaining to efficient and flexible FD-A-PPDU with the same and/or mixed WiFi generations transmission in accordance with the present disclosure. Process 800 may include one or more operations, actions, or functions as illustrated by one or more of blocks 810 as well as sub-blocks 812 and 814. Although illustrated as discrete blocks, various blocks of process 800 may be divided into additional blocks, combined into fewer blocks, or eliminated, depending on the desired implementation. Moreover, the blocks/sub-blocks of process 800 may be executed in the order shown in FIG. 8 or, alternatively in a different order. Furthermore, one or more of the blocks/sub-blocks of process 800 may be executed repeatedly or iteratively. Process 800 may be implemented by or in apparatus 710 and apparatus 720 as well as any variations thereof. Solely for illustrative purposes and without limiting the scope, process 800 is described below in the context of apparatus 710 implemented in or as STA 110 functioning as a non-AP STA and apparatus 720 implemented in or as STA 120 functioning as an AP STA of a wireless network such as a WLAN in network environment 100 in accordance with one or more of IEEE 802.11 standards. Process 800 may begin at block 810.

At 810, process 800 may involve processor 712 of apparatus 710 performing, via transceiver 716, a wireless communication (e.g., with apparatus 720) involving a FD-A-PPDU, which may be represented by 812 and 814.

At 812, process 800 may involve processor 712 transmitting the FD-A-PPDU.

At 814, process 800 may involve processor 712 receiving the FD-A-PPDU.

In some implementations, the FD-A-PPDU may be a 160MHz, 240MHz, 320MHz, 480MHz or 640MHz FD-A-PPDU. The FD-A-PPDU may include PPDUs having a same PPDU format or different PPDU formats of different WiFi generations and utilizing a minimum size of 80MHz non-overlapping frequency subblocks as a base building block.

In some implementations, the FD-A-PPDU may include multiple PPDUs of different WiFi generations combined with a same tone spacing and a same Gl.

In some implementations, in performing the wireless communication, process 800 may involve processor 712 performing a DL or TB UL communication.

In some implementations, the FD-A-PPDU may include multiple PPDUs. Moreover, in an event that apparatus 710 is without a non-primary channel access capability, apparatus 710 may be allocated at a primary channel.

In some implementations, in performing the wireless communication, process 800 may involve processor 712 performing the wireless communication in the 240MHz bandwidth. In such cases, the FD-A-PPDU may include: (a) in a first option, three 80MHz PPDUs; or (b) in a second option, one 160MHz PPDU and one 80MHz PPDU.

In some implementations, the FD-A-PPDU may have a bandwidth larger than or equal to 240MHz and may include multiple PPDUs. Moreover, in an event that apparatus 710 uses a 160MHz MRC decoding processing, apparatus 710 may be allocated at a primary 160MHz channel.

In some implementations, the FD-A-PPDU may have a bandwidth larger than or equal to 240MHz and comprises multiple PPDUs. Moreover, in an event that apparatus 710 is implemented in a smaller-bandwidth capable STA, apparatus 710 may be allocated at a primary channel.

In some implementations, in performing the wireless communication, process 800 may involve processor 712 performing the wireless communication in the 320MHz bandwidth. In such cases, the FD-A-PPDU may include: (a) in a first option, four 80MHz PPDUs; (b) in a second option, one 240MHz PPDU and one 80MHz PPDU; (c) in a third option, two 160MHz PPDUs; or (d) in a fourth option, one 160MHz PPDU and two 80MHz PPDUs.

In some implementations, in performing the wireless communication, process 800 may involve processor 712 performing the wireless communication in the 480MHz bandwidth. In such cases, the FD-A-PPDU may include: (a) in a first option, six 80MHz PPDUs; (b) in a second option, one 320MHz PPDU and one 160MHz PPDU; (c) in a third option, one 320MHz PPDU and two 80MHz PPDUs; (d) in a fourth option, two 240MHz PPDUs; (e) in a fifth option, one 240MHz PPDU, one 160MHz PPDU and one 80MHz PPDU; (f) in a sixth option, one 240MHz PPDU and three 80MHz PPDUs; or (g) in a seventh option, one 160MHz PPDU and four 80MHz PPDUs.

In some implementations, in performing the wireless communication, process 800 may involve processor 712 performing the wireless communication in the 640MHz bandwidth. In such cases, the FD-A-PPDU may include: (a) in a first option, eight 80MHz PPDUs; (b) in a second option, one 480MHz PPDU and one 160MHz PPDU; (c) in a third option, one 480MHz PPDU and two 80MHz PPDUs; (d) in a fourth option, two 320MHz PPDUs; (e) in a fifth option, one 320MHz PPDU, one 240MHz PPDU and one 80MHz PPDU; (f) in a sixth option, one 320MHz PPDU and two 160MHz PPDUs; (g) in a seventh option, one 320MHz PPDU, one 160MHz PPDU and two 80MHz PPDUs; (h) in an eighth option, one 320MHz PPDU and four 80MHz PPDUs; (i) in a ninth option, two 240MHz PPDUs and one 160MHz PPDU; (j) in a tenth option, two 240MHz PPDUs and two 80MHz PPDUs; (k) in an eleventh option, one 240MHz PPDU, one 160MHz PPDU and three 80MHz PPDUs; (l) in a twelfth option, one 240MHz PPDU and five 80MHz PPDUs; (m) in a thirteenth option, two 160MHz PPDUs and four 80MHz PPDUs; or (n) in a fourteenth option, one 160MHz PPDU and six 80MHz PPDUs.

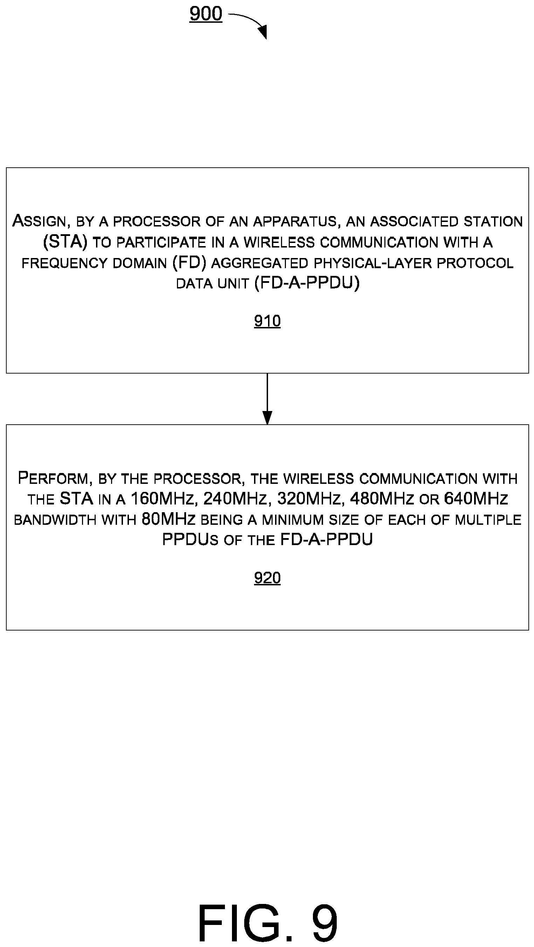

FIG. 9 illustrates an example process 900 in accordance with an implementation of the present disclosure. Process 900 may represent an aspect of implementing various proposed designs, concepts, schemes, systems and methods described above. More specifically, process 900 may represent an aspect of the proposed concepts and schemes pertaining to efficient and flexible FD-A-PPDU with the same and/or mixed WiFi generations transmission in accordance with the present disclosure. Process 900 may include one or more operations, actions, or functions as illustrated by one or more of blocks 910 and 920. Although illustrated as discrete blocks, various blocks of process 900 may be divided into additional blocks, combined into fewer blocks, or eliminated, depending on the desired implementation. Moreover, the blocks/sub-blocks of process 900 may be executed in the order shown in FIG. 9 or, alternatively in a different order. Furthermore, one or more of the blocks/sub-blocks of process 900 may be executed repeatedly or iteratively. Process 900 may be implemented by or in apparatus 710 and apparatus 720 as well as any variations thereof. Solely for illustrative purposes and without limiting the scope, process 900 is described below in the context of apparatus 710 implemented in or as STA 110 functioning as a non-AP STA and apparatus 720 implemented in or as STA 120 functioning as an AP STA of a wireless network such as a WLAN in network environment 100 in accordance with one or more of IEEE 802.11 standards. Process 900 may begin at block 910.

At 910, process 900 may involve processor 722 of apparatus 720, as an AP STA, assigning, via transceiver 726, an associated STA (e.g., apparatus 710) to participate in a wireless communication with a FD-A-PPDU. Process 900 may proceed from 910 to 920.

At 920, process 900 may involve processor 722 performing, via transceiver 726, the wireless communication with the STA in a 160MHz, 240MHz, 320MHz, 480MHz or 640MHz bandwidth with 80MHz being a minimum size of each of multiple PPDUs of the FD-A-PPDU.

In some implementations, the FD-A-PPDU may include different PPDUs utilizing non-overlapping frequency subblocks.

In some implementations, the FD-A-PPDU may include different PPDUs having a same PPDU format or different PPDU formats of different WiFi generations and aligned in a time domain.

In some implementations, the FD-A-PPDU may include different PPDUs of different WiFi generations combined with a same tone spacing and a same Gl.

In some implementations, in performing the wireless communication, process 900 may involve processor 722 performing a DL or TB UL communication.

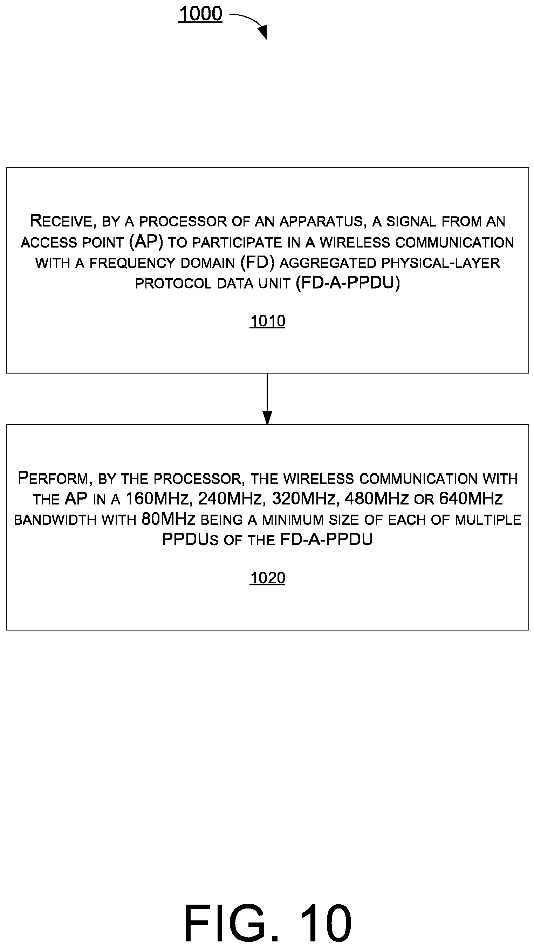

FIG. 10 illustrates an example process 1000 in accordance with an implementation of the present disclosure. Process 1000 may represent an aspect of implementing various proposed designs, concepts, schemes, systems and methods described above. More specifically, process 1000 may represent an aspect of the proposed concepts and schemes pertaining to efficient and flexible FD-A-PPDU with the same and/or mixed WiFi generations transmission in accordance with the present disclosure. Process 1000 may include one or more operations, actions, or functions as illustrated by one or more of blocks 1010 and 1020. Although illustrated as discrete blocks, various blocks of process 1000 may be divided into additional blocks, combined into fewer blocks, or eliminated, depending on the desired implementation. Moreover, the blocks/sub-blocks of process 1000 may be executed in the order shown in FIG. 10 or, alternatively in a different order. Furthermore, one or more of the blocks/sub-blocks of process 1000 may be executed repeatedly or iteratively. Process 1000 may be implemented by or in apparatus 710 and apparatus 720 as well as any variations thereof. Solely for illustrative purposes and without limiting the scope, process 1000 is described below in the context of apparatus 710 implemented in or as STA 110 functioning as a non-AP STA and apparatus 720 implemented in or as STA 120 functioning as an AP STA of a wireless network such as a WLAN in network environment 100 in accordance with one or more of IEEE 802.11 standards. Process 1000 may begin at block 1010.

At 1010, process 1000 may involve processor 712 of apparatus 710, as a STA, receiving, via transceiver 716, a signal from an AP (e.g., apparatus 720) to participate in a wireless communication with a FD-A-PPDU. Process 1000 may proceed from 1010 to 1020.

At 1020, process 1000 may involve processor 712 performing, via transceiver 716, the wireless communication with the AP in a 160MHz, 240MHz, 320MHz, 480MHz or 640MHz bandwidth with 80MHz being a minimum size of each of multiple PPDUs of the FD-A-PPDU.

In some implementations, the FD-A-PPDU may include different PPDUs utilizing non-overlapping frequency subblocks.

In some implementations, the FD-A-PPDU may include different PPDUs having a same PPDU format or different PPDU formats of different WiFi generations and aligned in a time domain.

In some implementations, the FD-A-PPDU may include different PPDUs of different WiFi generations combined with a same tone spacing and a same Gl.

In some implementations, in performing the wireless communication, process 1000 may involve processor 712 performing a DL or TB UL communication.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method (800), comprising:
performing (810), by a processor of an apparatus, a wireless communication by:
transmitting (812) a frequency domain, FD, aggregated physical-layer protocol data unit, FD-A-PPDU; or
receiving (814) the FD-A-PPDU,
wherein the FD-A-PPDU comprises a 160MHz, 240MHz, 320MHz, 480MHz or 640MHz FD-A-PPDU, and
wherein the FD-A-PPDU comprises PPDUs having a same PPDU format or different PPDU formats of different WiFi generations and utilizing a minimum size of 80MHz non-overlapping frequency subblocks as a base building block.

2. The method (800) of Claim 1, wherein the FD-A-PPDU comprises multiple PPDUs of different WiFi generations combined with a same tone spacing and a same guard interval, Gl.

3. The method (800) of Claim 1, wherein the performing of the wireless communication comprises performing a downlink, DL, or trigger-based, TB, uplink, UL, communication.

4. The method (800) of Claim 1, wherein the FD-A-PPDU comprises multiple PPDUs, and wherein, in an event that the apparatus is without a non-primary channel access capability, the apparatus is allocated at a primary channel.

5. The method (800) of Claim 1, wherein the performing of the wireless communication comprises performing the wireless communication in the 240MHz bandwidth, and wherein the FD-A-PPDU comprises:
in a first option, three 80MHz PPDUs; or
in a second option, one 160MHz PPDU and one 80MHz PPDU;
or wherein the performing of the wireless communication comprises performing the wireless communication in the 320MHz bandwidth, and wherein the FD-A-PPDU comprises:
in a first option, four 80MHz PPDUs;
in a second option, one 240MHz PPDU and one 80MHz PPDU;
in a third option, two 160MHz PPDUs; or
in a fourth option, one 160MHz PPDU and two 80MHz PPDUs.

6. The method (800) of Claim 1, wherein the FD-A-PPDU has a bandwidth larger than or equal to 240MHz and comprises multiple PPDUs, and wherein, in an event that the apparatus uses a 160MHz maximal ratio combining, MRC, decoding processing, the apparatus is allocated at a primary 160MHz channel; or wherein the FD-A-PPDU has a bandwidth larger than or equal to 240MHz and comprises multiple PPDUs, and wherein in an event that the apparatus is implemented in a smaller-bandwidth capable station, STA, the apparatus is allocated at a primary channel.

7. The method (800) of Claim 1, wherein the performing of the wireless communication comprises performing the wireless communication in the 480MHz bandwidth, and wherein the FD-A-PPDU comprises:
in a first option, six 80MHz PPDUs;
in a second option, one 320MHz PPDU and one 160MHz PPDU;
in a third option, one 320MHz PPDU and two 80MHz PPDUs;
in a fourth option, two 240MHz PPDUs;
in a fifth option, one 240MHz PPDU, one 160MHz PPDU and one 80MHz PPDU;
in a sixth option, one 240MHz PPDU and three 80MHz PPDUs; or
in a seventh option, one 160MHz PPDU and four 80MHz PPDUs;
or wherein the performing of the wireless communication comprises performing the wireless communication in the 640MHz bandwidth, and wherein the FD-A-PPDU comprises:
in a first option, eight 80MHz PPDUs;
in a second option, one 480MHz PPDU and one 160MHz PPDU;
in a third option, one 480MHz PPDU and two 80MHz PPDUs;
in a fourth option, two 320MHz PPDUs;
in a fifth option, one 320MHz PPDU, one 240MHz PPDU and one 80MHz PPDU;
in a sixth option, one 320MHz PPDU and two 160MHz PPDUs;
in a seventh option, one 320MHz PPDU, one 160MHz PPDU and two 80MHz PPDUs;
in an eighth option, one 320MHz PPDU and four 80MHz PPDUs;
in a ninth option, two 240MHz PPDUs and one 160MHz PPDU;
in a tenth option, two 240MHz PPDUs and two 80MHz PPDUs;
in an eleventh option, one 240MHz PPDU, one 160MHz PPDU and three 80MHz PPDUs;
in a twelfth option, one 240MHz PPDU and five 80MHz PPDUs;
in a thirteenth option, two 160MHz PPDUs and four 80MHz PPDUs; or
in a fourteenth option, one 160MHz PPDU and six 80MHz PPDUs.

8. A method (900), comprising:
assigning (910), by a processor (722) of an apparatus (720), an associated station, STA, to participate in a wireless communication with a frequency domain, FD, aggregated physical-layer protocol data unit, FD-A-PPDU; and
performing (920), by the processor (722), the wireless communication with the STA in a 160MHz, 240MHz, 320MHz, 480MHz or 640MHz bandwidth with 80MHz being a minimum size of each of multiple PPDUs of the FD-A-PPDU.

9. The method (900) of Claim 8, wherein the FD-A-PPDU comprises different PPDUs utilizing non-overlapping frequency subblocks.

10. The method (900) of Claim 8, wherein the FD-A-PPDU comprises different PPDUs having a same PPDU format or different PPDU formats of different WiFi generations and aligned in a time domain.

11. The method (900) of Claim 8, wherein the FD-A-PPDU comprises different PPDUs of different WiFi generations combined with a same tone spacing and a same guard interval, GI; or wherein the performing of the wireless communication comprises performing a downlink, DL, or trigger-based, TB, uplink, UL, communication.

12. A method (1000), comprising:
receiving (1010), by a processor (712) of an apparatus (710), a signal from an access point, AP, to participate in a wireless communication with a frequency domain, FD, aggregated physical-layer protocol data unit, FD-A-PPDU; and
performing (1020), by the processor (712), the wireless communication with the AP in a 160MHz, 240MHz, 320MHz, 480MHz or 640MHz bandwidth with 80MHz being a minimum size of each of multiple PPDUs of the FD-A-PPDU.

13. The method (1000) of Claim 12, wherein the FD-A-PPDU comprises different PPDUs utilizing non-overlapping frequency subblocks.

14. The method (1000) of Claim 12, wherein the FD-A-PPDU comprises different PPDUs having a same PPDU format or different PPDU formats of different WiFi generations and aligned in a time domain.

15. The method (1000) of Claim 12, wherein the FD-A-PPDU comprises different PPDUs of different WiFi generations combined with a same tone spacing and a same guard interval, GI; or wherein the performing of the wireless communication comprises performing a downlink, DL, or trigger-based, TB, uplink, UL, communication.
